# EUROPEAN PATENT APPLICATION

(11) **EP 4 549 066 A1**
(43) Date of publication of application: **07.05.2025**
(21) Application number: 23831307.6
(22) Date of filing: 23.06.2023
(51) Int. Cl.: B23C 5/20, B23B 27/14, B23C 5/06, B23C 5/10

(54) **CUTTING INSERT AND CUTTING EDGE REPLACEABLE ROTARY CUTTING TOOL**

(30) Priority: 28.06.2022 JP 2022103176
(71) Applicant: MOLDINO Tool Engineering, Ltd., Tokyo 130-0026 (JP)
(72) Inventor: INAGAKI, Fumihiko, Narita-shi, Chiba 286-0825 (JP)
(74) Representative: Hoffmann Eitle
(86) International application number: PCT/JP2023/023363
(87) International publication number: WO 2024/004865

(57) **Abstract**

A cutting insert (1) includes a rake face (2), a seating surface (3) facing the rake face (2), a flank face (4) configured to connect the rake face (2) and the seating surface (3), and a cutting edge (5) formed in an intersecting ridgeline between the rake face (2) and the flank face (4). The cutting edge (5) includes a linear main cutting edge (5b), a corner edge (5a), and a wiper edge (5c) in this order. A recess portion (6) is provided in an end portion of the main cutting edge (5b) on a side opposite to an end portion connected to the corner edge (5a). The wiper edge (5c) is formed in an arc shape, and is connected to the corner edge (5a) by a tangent line. When viewed from a side facing the rake face (2), and when an extension line of the main cutting edge (5b) is defined as L1, a tangent line of the wiper edge (5c) which is perpendicular to the extension line L1 of the main cutting edge (5b) is defined as L2, and a tangent line of the wiper edge (5c) which passes through an end point P of the wiper edge (5c) on a corner edge (5a) side is defined as L3, an angle θ formed by the tangent line L2 and the tangent line L3 is within a range of 0.010° ≤ θ ≤ 3.0°.

## Description

### TECHNICAL FIELD

The present invention relates to a cutting insert and an indexable rotary cutting tool including the cutting insert and rotated around an axis.

Priority is claimed on Japanese Patent Application No. 2022-103176, filed on June 28, 2022, the content of which is incorporated herein by reference.

### BACKGROUND ART

In the related art, as a cutting tool used in a step such as intermediate finish machining or finish machining where surface roughness of a machined surface needs to be suppressed, there is provided a cutting insert including a corner radius and a finishing edge (hereinafter, also referred to as a wiper edge) in a tangent line portion of a linear edge. Most of the cutting inserts have a linear wiper edge, but some cutting inserts including an arc-shaped wiper edge also exist.

### CITATION LIST

### PATENT DOCUMENT

Patent Document 1: Japanese Unexamined Patent Application, First Publication No. 2005-103710

### SUMMARY OF INVENTION

### TECHNICAL PROBLEM

For example, Patent Document 1 discloses a shape including arc-shaped wiper edges on both sides of a corner edge. It is disclosed that machining surface roughness is reduced by setting a proper wiper edge to have an arc shape, together with a bottom cutting edge and a cross cutting edge.

However, the invention disclosed in Patent Document 1 focuses on surface roughness of a machined surface in the feeding direction, and is not intended to reduce a step difference amount generated in a radial direction. In addition, a large-diameter tool that does not require so high finished surface accuracy is assumed. This is clear from the following fact. In addition to the disclosure in Patent Document 1 in which an outer diameter of a rotary tool is φ50, in Table 1 and Table 2 in Patent Document 1, even when a more satisfactory result is obtained for the surface roughness of the machined surface, surface roughness Rz has a relatively great value of approximately 1.0 mm. Furthermore, Patent Document 1 discloses that a workpiece is made of aluminum.

When the workpiece is made of aluminum, an insert shape is designed to improve cutting performance by setting a rake angle to a positive shape and reducing a tool angle. When a hard steel material is cut by using this cutting insert, there is a possibility that chipping occurs.

Therefore, the tool disclosed in Patent Document 1 is used for rough machining of an aluminum material, and is less likely to be used for finish machining of a steel material. In particular, it is difficult to apply many vehicle engines, driving components, and the like which require high machining accuracy in which surface roughness of a finished surface is 5 µm or smaller to a die mold formed of a chromium molybdenum alloy steel material.

The present invention is made in view of the above-described circumstances, and one object is to provide a cutting insert which can achieve surface roughness of a machined surface of 5 µm or smaller, and an indexable rotary cutting tool including the cutting insert.

### SOLUTION TO PROBLEM

[1] According to one aspect of the present invention, a cutting insert includes a rake face, a seating surface facing the rake face, a flank face configured to connect the rake face and the seating surface, and a cutting edge formed in an intersecting ridgeline between the rake face and the flank face. The cutting edge includes a linear main cutting edge (peripheral cutting edge), a corner edge, and a wiper edge in this order. A recess portion is provided in an end portion of the main cutting edge (peripheral cutting edge) on a side opposite to an end portion connected to the corner edge. The wiper edge is formed in an arc shape, and is connected to the corner edge by a tangent line. When viewed from a side facing the rake face, and when an extension line of the main cutting edge (peripheral cutting edge) is defined as L1, a tangent line of the wiper edge which is perpendicular to the extension line L1 of the main cutting edge is defined as L2, and a tangent line of the wiper edge which passes through an end point P of the wiper edge on a corner edge side is defined as L3, an angle θ formed by the tangent line L2 and the tangent line L3 is within a range of 0.010° ≤ θ ≤ 3.0°.

According to the above-described configuration, the wiper edge is formed in the arc shape. In this manner, compared to a machined surface when the wiper edge has a linear shape, in addition to an advantageous effect of reducing machined surface roughness in a tool feed direction, it is possible to obtain an advantageous effect of reducing a step difference between paths which occurs in a tool radius direction and improving flatness of an entire machined surface.

Furthermore, the angle θ formed by the tangent line L2 and the tangent line L3 is set to be in a range of 0.010° ≤ θ ≤ 3.0°. In this manner, the surface roughness of the machined surface can be reduced. In addition, the value of the angle θ is preferably within a range of 0.015° ≤ θ ≤ 2.0° and more preferably within a range of 0.020° ≤ 0 ≤ 1.0°. In this manner, the above-described advantageous effect obtained by the arc-shaped wiper edge can be further enhanced.

The tool feed direction is a direction in which the indexable cutting tool advances while rotating during cutting, and the tool radius direction is a direction perpendicular to the tool feed direction.

Here, when the angle θ formed by the tangent line L2 and the tangent line L3 is larger than 3.0°, the step difference between the paths which occurs in the tool radius direction increases, and the flatness of the machined surface deteriorates.

On the other hand, when the angle θ formed by the tangent line L2 and the tangent line L3 is smaller than 0.010°, the wiper edge is excessively close to a linear shape. Therefore, the above-described advantageous effect obtained by the arc-shaped wiper edge cannot be sufficiently obtained.

[2] In the cutting insert according to [1], the wiper edge may have a perfect arc shape.

According to the above-described configuration, the cutting insert can be easily manufactured by forming the wiper edge in the perfect arc shape. As a result, a highly accurate cutting insert can be manufactured.

[3] In the cutting insert according to [2], an arc radius R of the wiper edge may be 50 mm ≤ R < 200 mm.

When the arc radius R of the wiper edge is smaller than 50 mm, a protrusion amount of the wiper edge with respect to the machined surface is large. Therefore, it is difficult to reduce machined surface roughness in the tool feed direction and to reduce the step difference between the paths which occurs in the tool radius direction. Consequently, the surface roughness of the machined surface deteriorates.

On the other hand, when the arc radius R of the wiper edge is 200 mm or larger, a shape of the wiper edge is close to a linear shape. Therefore, an advantageous effect of the arc shape is reduced.

Here, the arc radius R of the wiper edge is preferably 50 mm ≤ R ≤ 150 mm, and more preferably 100 mm ≤ R ≤ 150 mm.

[4] In the cutting insert according to any one of [1] to [3], the cutting edge may include the main cutting edge, the corner edge, the wiper edge, a linear inner cutting edge, and a second corner edge. The inner cutting edge may be connected to an end portion of the wiper edge on a side opposite to an end portion connected to the corner edge. The second corner edge may be connected to an end portion of the inner cutting edge on a side opposite to an end portion connected to the wiper edge. An angle α formed by the main cutting edge and the inner cutting edge may be within a range of 80° ≤ α < 90°.

When the angle α formed by the main cutting edge and the inner cutting edge is 80° or larger, a volume of the cutting insert can be sufficiently secured. As a result, rigidity of the cutting insert can be improved.

[5] According to one aspect of the present invention, an indexable rotary cutting tool includes a cutting insert including a rake face, a seating surface facing the rake face, a flank face configured to connect the rake face and the seating surface, and a cutting edge formed in an intersecting ridgeline between the rake face and the flank face, and a tool main body rotatable around an axis of a rotational axis. The cutting edge includes a linear main cutting edge, a corner edge, and a wiper edge in this order, a recess portion is provided in an end portion of the main cutting edge on a side opposite to an end portion connected to the corner edge, the wiper edge is formed in an arc shape, and is connected to the corner edge by a tangent line, and when viewed in a direction facing the rake face, and when an extension line of the main cutting edge is defined as L1, a tangent line of the wiper edge which is perpendicular to the extension line L1 is defined as L2, and a tangent line of the wiper edge which passes through an end point P of the wiper edge on a corner edge side is defined as L3, an angle θ formed by the tangent line L2 and the tangent line L3 is within a range of 0.010° ≤ θ ≤ 3.0°. The cutting insert is mounted on the tool main body. A lowest point of the cutting insert in a direction along the rotational axis is located on the wiper edge.

The lowest point is a point located in a most tip in a direction of the rotational axis in the cutting insert mounted on the tool main body. In the present invention, a tool lowest point is provided on the wiper edge instead of the corner edge. Accordingly, even when the indexable rotary cutting tool vibrates or the indexable rotary cutting tool itself deflects under high load cutting conditions, the wiper edge can be continuously in contact with the workpiece. In this manner, the surface roughness of the machined surface can be reduced.

[6] In the indexable rotary cutting tool according to [5], the wiper edge of the cutting insert may have a perfect arc shape when viewed in the direction facing the rake face.

[7] **In** the indexable rotary cutting tool according to [6], an arc radius R of the wiper edge of the cutting insert may be 50 mm ≤ R < 200 mm.

### ADVANTAGEOUS EFFECTS OF INVENTION

According to the present invention, it is possible to provide a cutting insert which can achieve surface roughness of a machined surface of 5 µm or smaller, and an indexable rotary cutting tool including the cutting insert.

### BRIEF DESCRIPTION OF DRAWINGS

FIG. 1 is a perspective view representing a cutting insert according to the present embodiment.
FIG. 2 is a plan view representing the cutting insert according to the present embodiment.
FIG. 3 is a side view representing the cutting insert according to the present embodiment when viewed from a short side.
FIG. 4 is a side view representing the cutting insert according to the present embodiment when viewed from a long side.
FIG. 5 is a schematic diagram of a region surrounded by a two-dot chain line represented in FIG. 2.
FIG. 6 is a perspective view of an indexable rotary cutting tool representing a state where the cutting insert according to the present embodiment is mounted on a tool main body.
FIG. 7 is a perspective view of the tool main body on which the cutting insert according to the present embodiment can be mounted.
FIG. 8 is a diagram for describing a tool feed direction and a tool radius direction of an indexable cutting tool.

### DESCRIPTION OF EMBODIMENTS

### <Embodiment>

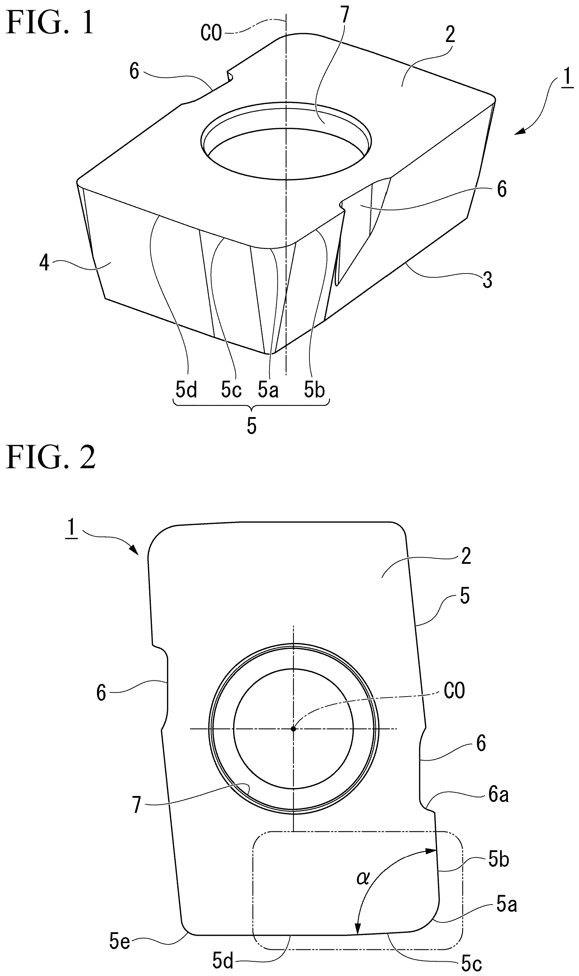

Hereinafter, a cutting insert and an indexable rotary cutting tool according to the present invention will be described with reference to FIGS. 1 to 5. In drawings used to describe the embodiment, in some cases, main parts may be enlarged, emphasized, and extracted to facilitate understanding of characteristics of the present invention.

### (Cutting Insert)

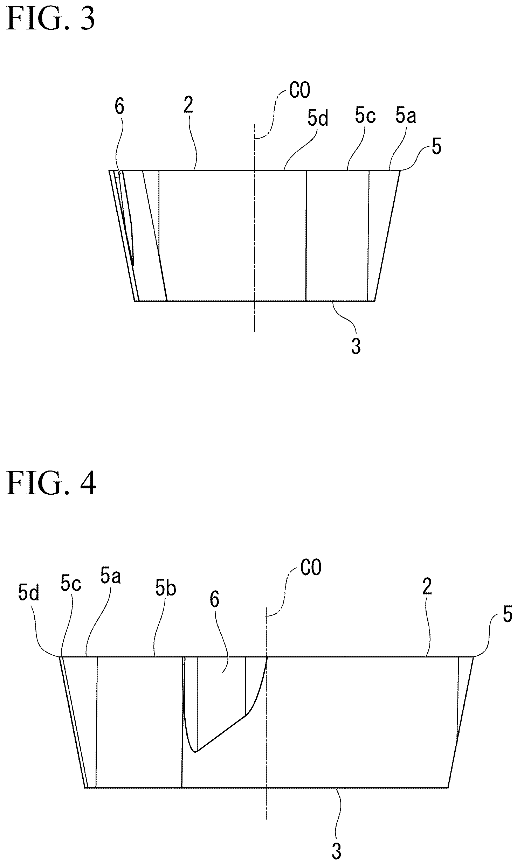

FIG. 1 is a perspective view representing the cutting insert according to the present embodiment. FIG. 2 is a plan view representing the cutting insert according to the present embodiment. FIG. 3 is a side view representing the cutting insert according to the present embodiment when viewed from a short side. FIG. 4 is a side view representing the cutting insert according to the present embodiment when viewed from a long side.

A cutting insert 1 according to the present embodiment has a polygonal shape when viewed in a direction along a center line CO extending in a thickness direction.

In the following description, the direction along the center line CO may be simply referred to as the thickness direction. In some cases, a direction orthogonal to the center line CO may be simply referred to as a width direction. Similarly, in some cases, a circumferential direction around an axis having the center line CO as a center may be simply referred to as the circumferential direction.

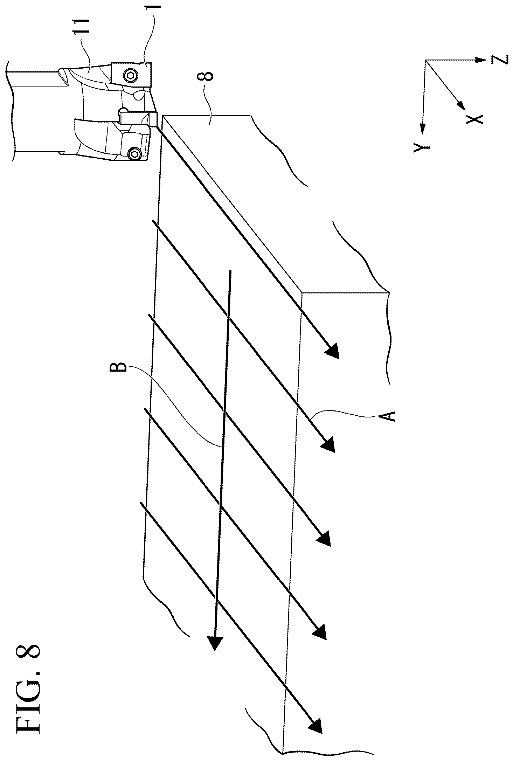

In addition, in the following description, a tool feed direction is a direction in which the indexable cutting tool advances while rotating when a workpiece is cut, and a tool radius direction is a direction perpendicular to the tool feed direction. Here, FIG. 8 is a diagram for describing a tool feed direction A and a tool radius direction B. For example, the tool feed direction A with respect to a workpiece 8 represented in FIG. 8 is a direction along an X-direction, and the tool radius direction B is a direction along a Y-direction. An indexable rotary cutting tool 11 comes into contact with the workpiece 8 in a Z-direction which is orthogonal to the X-direction and the Y-direction.

As represented in FIGS. 1 to 4, in the cutting insert 1, an upper surface is a rake face 2, a lower surface facing the rake face 2 is a seating surface 3, and a side surface that connects the rake face 2 and the seating surface 3 is a flank face 4. The seating surface 3 has a smaller size in a plan view than the rake face 2, and is included inside a projection region of the rake face 2 in a center line direction (thickness direction).

A cutting edge 5 is formed in an intersecting ridgeline between the rake face 2 and the flank face 4.

The cutting edge 5 includes a corner edge (first corner edge) 5a located in a corner portion of the rake face 2, a linear main cutting edge (peripheral cutting edge) 5b connected to one end side of the corner edge 5a, an arc-shaped wiper edge 5c connected to the other end side of the corner edge 5a, a linear inner cutting edge 5d connected to an end portion of the wiper edge 5c on a side opposite to an end portion connected to the corner edge 5a, and a second corner edge 5e connected to an end portion of the inner cutting edge 5d on a side opposite to an end portion connected to the wiper edge 5c.

The second corner edge 5e is located in another corner portion (corner portion having an obtuse angle) different from the corner portion where the first corner edge 5a is located, in a plurality of corner portions of the rake face 2. A curvature radius of the second corner edge 5e is smaller than a curvature radius of the first corner edge 5a.

The main cutting edge 5b, the corner edge 5a, the wiper edge 5c, the inner cutting edge 5d, and the second corner edge 5e are disposed in this order in a rightward rotating (clockwise) direction in a plan view of the rake face 2, and have a rectangular plate shape which is rotationally symmetrical by 180° with respect to the center line CO. In addition, the corner edge 5a and the wiper edge 5c are smoothly connected.

In some cases, each cutting edge may function or may not function as the cutting edge depending on a machining method or a machining shape. For example, during vertical wall machining, the main cutting edge 5b is mainly used.

The wiper edge 5c can be used for bottom surface finishing, can smooth an uneven portion of a bottom surface, and can reduce surface roughness of a machined surface.

The corner edge 5a can be widely used for corner portions or shape portions having many uneven portions during vertical wall machining.

The inner cutting edge 5d functions as the cutting edge during an inclined cutting operation or the like.

As represented in FIG. 2, an angle α formed by the main cutting edge 5b formed on a long side of the rake face 2 and the inner cutting edge 5d formed on a short side is an acute angle. The angle α formed by the main cutting edge 5b and the inner cutting edge 5d which have mutually linear shapes is in a range of 80° ≤ α < 90°, for example. When the angle α formed by the main cutting edge 5b and the inner cutting edge 5d is 80° or larger, a volume of the cutting insert 1 can be sufficiently secured. As a result, rigidity of the cutting insert 1 can be improved.

A value of the above-described α is preferably within a range of 83° ≤ α ≤ 89°, and more preferably within a range of 85° ≤ α ≤ 88°. In this manner, the rigidity of the cutting insert 1 can be further improved.

As represented in FIGS. 1 and 2, the cutting insert 1 is provided with a recess portion 6 in an end portion of the main cutting edge 5b on a side opposite to an end portion connected to the corner edge 5a. Since the recess portion 6 is provided, for example, when reciprocating machining is performed, an end portion 6a (FIG. 2) of the recess portion 6 on the main cutting edge 5b side functions as the cutting edge.

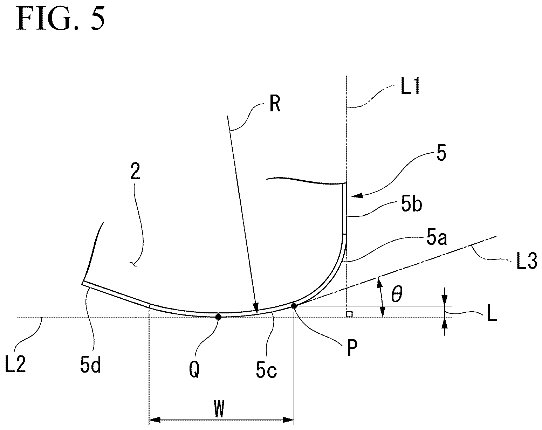

FIG. 5 is a schematic diagram of a region surrounded by a two-dot chain line represented in FIG. 2.

In the present embodiment, the wiper edge 5c of the main cutting edge 5b is caused to have an arc shape. In this manner, compared to machining when the wiper edge has a linear shape, in addition to an advantageous effect of reducing machined surface roughness in the tool feed direction A (X-direction), it is possible to obtain an advantageous effect of reducing a step difference between paths which occurs in the tool radius direction B (Y-direction) and improving flatness of an entire machined surface.

Here, when an extension line of the main cutting edge 5b is defined as L1, a tangent line of the wiper edge 5c which is perpendicular to the extension line L1 is defined as L2, and a tangent line of the wiper edge 5c which passes through an end point P on the corner edge 5a side of the wiper edge 5c is defined as L3, an angle θ formed by the tangent line L2 and the tangent line L3 is in a range of 0.010° ≤ θ ≤ 3.0°. Since the angle θ formed by the tangent line L2 and the tangent line L3 is set within the above-described range, surface roughness of a machined surface can be reduced.

That is, since a curvature of the wiper edge 5c is set to a curvature close to a curvature of the corner edge 5a, a step difference is less likely to occur between the wiper edge 5c and the corner edge 5a, and a polygonal shape is less likely to be formed in a boundary point P (end point P described above) between the wiper edge 5c and the corner edge 5a.

Therefore, a cutter mark is less likely to be noticeable, and the surface roughness of the machined surface can be reduced.

Here, when the angle θ formed by the tangent line L2 and the tangent line L3 is larger than 3.0°, a protrusion amount (protrusion amount L) of the wiper edge 5c with respect to the machined surface is large. Therefore, the step difference between the paths which occurs in the tool radius direction B is increased, and desired surface roughness of the machined surface cannot be obtained. The protrusion amount L may be a distance from the boundary point P between the wiper edge 5c and the corner edge 5a to the machined surface (tangent line L2 in the present embodiment).

On the other hand, when the angle θ formed by the tangent line L2 and the tangent line L3 is smaller than 0.010°, the wiper edge 5c having a curved shape is excessively close to a linear shape. Therefore, the advantageous effect of the arc-shaped wiper edge 5c cannot be sufficiently obtained. When the wiper edge 5c is brought close to the linear shape, the advantageous effect of the arc shape is reduced.

Therefore, since the angle θ formed by the tangent line L2 and the tangent line L3 is set to be within the above-described range, it is possible to sufficiently obtain the advantageous effect of the arc-shaped wiper edge 5c, which can reduce the machined surface roughness in the tool feed direction A (X-direction), can reduce the step difference between the paths which occurs in the tool radius direction B (Y-direction), and can improve the flatness of the entire machined surface.

A value of the above-described θ is preferably within a range of 0.015° ≤ θ ≤ 2.0° and more preferably within a range of 0.020° ≤ θ ≤ 1.0°. In this manner, the advantageous effect obtained by the arc-shaped wiper edge 5c can be further enhanced.

In addition, the wiper edge 5c having the arc shape may have the arc shape, and may also have a curved shape such as an ellipse. However, it is preferable to have a perfect arc shape. Since the wiper edge 5c is formed in the perfect arc shape, the cutting insert 1 is easily manufactured. As a result, it is possible to obtain the cutting insert 1 with satisfactory dimensional accuracy, and accuracy of the machined surface is also improved.

Here, in a case of the wiper edge 5c having the perfect arc shape, an arc radius (curvature radius) R is preferably in a range of 50 mm ≤ R < 200 mm. Here, the arc radius R of the wiper edge is preferably 50 mm ≤ R ≤ 150 mm, and more preferably 100 mm ≤ R ≤ 150 mm.

In this way, since the arc radius R of the wiper edge 5c is set to be in the range of 50 mm ≤ R < 200 mm, when the cutting insert 1 is mounted on the tool main body 10 (to be described later) and used as the indexable rotary cutting tool 11, through advantageous effects of reducing the machined surface roughness in the tool feed direction A (X-direction), reducing the step difference between the paths which occurs in the tool radius direction B (Y-direction), and improving the flatness of the entire machined surface, it is possible to obtain an advantageous effect of stabilizing the surface roughness of the machined surface.

In addition, as represented in FIG. 5, a width W of the wiper edge 5c according to the present embodiment is approximately 1.5 mm, but can be appropriately changed depending on a size of the cutting insert 1. Furthermore, since a lowest point Q is provided on the wiper edge 5c, the surface roughness of the machined surface can be reduced. The lowest point Q is a point located in a most tip in a direction of the rotational axis in the cutting insert mounted on the tool main body.

### (Indexable Rotary Cutting Tool)

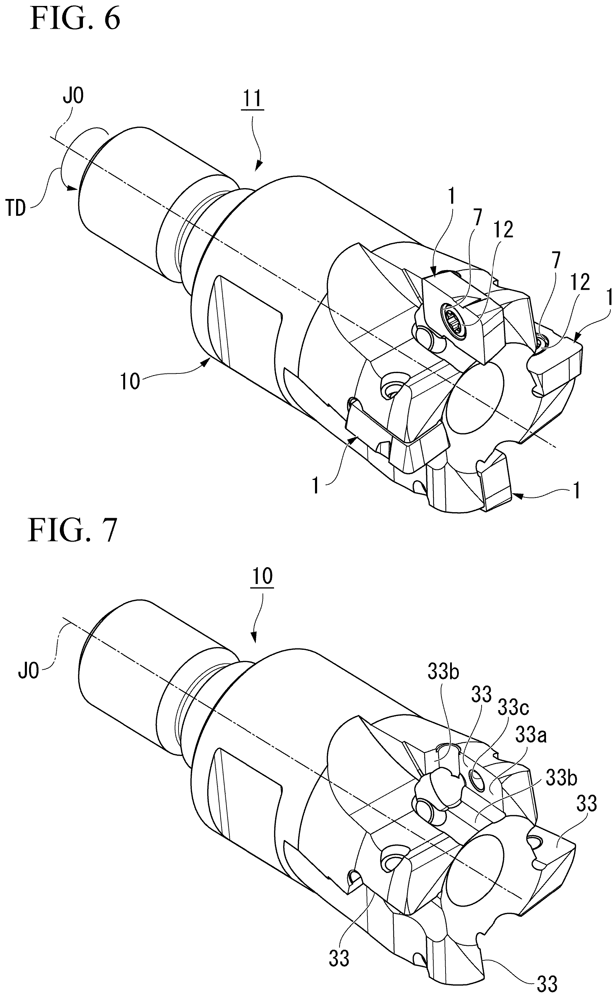

FIG. 6 is a perspective view representing the indexable rotary cutting tool 11 in a state where the cutting insert 1 in the present embodiment is mounted on the tool main body 10. FIG. 7 is a perspective view representing the tool main body 10 on which the cutting insert 1 according to this embodiment can be mounted.

As represented in FIG. 6, the indexable rotary cutting tool 11 includes the tool main body 10 and a plurality of the cutting inserts 1. In the present embodiment, for example, four cutting inserts 1 are provided. The tool main body 10 of the indexable rotary cutting tool 11 is rotated in a rotational direction TD around a rotational axis JO as a center to perform a cutting operation.

As represented in FIG. 7, in the present embodiment, four insert mounting seats 33 are formed in tip end portions of the tool main body 10 to correspond to the number of the mounted cutting inserts 1. The number of the insert mounting seats 33 increases or decreases depending on a tool diameter of the indexable rotary cutting tool 11. Therefore, when the tool diameter is large, the number of the insert mounting seats 33 increases, and conversely, when the tool diameter is small, the number of the insert mounting seats 33 decreases.

The insert mounting seat 33 includes a mounting seat bottom surface 33a and a pair of mounting seat wall surfaces 33b.

The mounting seat bottom surface 33a has a rectangular shape having an area substantially equal to that of the seating surface 3 of the cutting insert 1, and faces the rotational direction TD of the tool main body 10. The pair of mounting seat wall surfaces 33b are surfaces each extending to a side in the rotational direction TD from two sides of the mounting seat bottom surface 33a.

The mounting seat bottom surface 33a faces and comes into contact with the seating surface 3 of the cutting insert 1.

The mounting seat wall surface 33b along an axial direction of the pair of mounting seat wall surfaces 33b faces and comes into contact with a side surface along a long side of the cutting insert 1. The mounting seat wall surface 33b along a radial direction in the pair of mounting seat wall surfaces 33b comes into contact with a side surface along a short side of the cutting insert 1. That is, the pair of mounting seat wall surfaces 33b faces and comes into contact with the flank face of the cutting insert 1.

A screw hole 33c is formed at a substantially center of the mounting seat bottom surface 33a. The screw hole 33c is a hole that can communicate with a mounting hole 7 formed at the center of the cutting insert 1. A mounting screw 12 for mounting the cutting insert 1 is inserted into the screw hole 33c.

The cutting insert 1 is mounted on the tool main body 10 in such a manner that the mounting screw 12 inserted into the mounting hole 7 formed at the center of the cutting insert 1 is tightened to the screw hole 33c formed at the center of the mounting seat bottom surface 33a of the tool main body 10. In this way, the plurality of cutting inserts 1 are detachably mounted on the respective insert mounting seats 33 of the tool main body 10 by using the mounting screws 12.

In the indexable rotary cutting tool 11 according to the present embodiment, all of the four cutting inserts mounted on the tool main body 10 include the arc-shaped wiper edges 5c. Since the arc radius of the wiper edge 5c is set to be within the above-described range, it is possible to achieve the surface roughness of the machined surface of 5 µm or smaller which is a target value. Therefore, it is possible to obtain advantageous effects of reducing the machined surface roughness in the tool feed direction A (X-direction), reducing the step difference between the paths which occurs in the tool radius direction B (Y-direction), and improving the flatness of the entire machined surface. In this manner, the surface roughness of the machined surface is stabilized, and a finished surface with high machining accuracy can be obtained.

As a result, the indexable rotary cutting tool 11 according to the present embodiment can be used for machining die molds made of hard chromium molybdenum alloy steel materials, such as vehicle engines, driving components, and the like which require high machining accuracy.

In the indexable rotary cutting tool 11 according to the present embodiment, the lowest point Q of the cutting insert 1 in the direction along the rotational axis JO is located on the wiper edge 5c. Since the lowest point Q is provided on the wiper edge 5c, even when the indexable rotary cutting tool 11 vibrates or the indexable rotary cutting tool 11 itself deflects under high load cutting conditions, the wiper edge 5c can be continuously in contact with the workpiece 8. In this manner, the surface roughness of the machined surface can be reduced.

### [Examples]

In order to confirm the advantageous effects of the present invention, cutting tests are performed by using cutting inserts (Examples 1 to 3 and Comparative Examples 1 and 2) shown in Table 1.

Machining conditions are as follows.

### (Machining Conditions)

· Workpiece: Chromium molybdenum alloy steel material (46.5 HRC)
· Tool diameter: φ25 mm
· Cutting speed Vc: 275 m/min
· Feed amount per edge fz: 0.057 mm/t
· Axial cutting depth ap: 0.04 mm
· Radial cutting depth ae: 20 mm
· Protrusion length OH: 175 mm
· Coolant: Air

**[Table 1]**

| | Presence or Absence of Wiper Edge | θ | Wiper Edge R Size | Wiper Edge Width |
|---|---|---|---|---|
| Example 1 | Present | 0.083° | R50 mm | 1.5 mm |
| Example 2 | Present | 0.045° | R100 mm | 1.5 mm |
| Example 3 | Present | 0.018° | R150 mm | 1.5 mm |
| Comparative Example 1 | Present | 0.003° | R200 mm | 1.5 mm |
| Comparative Example 2 | Absent | - | - | - |

Results of the above-described cutting test are shown in Table 2.

**[Table 2]**

| | θ | Wiper Edge R Size | Maximum Surface Roughness |
|---|---|---|---|
| Example 1 | 0.083° | R50 mm | *4.3 µ*m |
| Example 2 | 0.045° | R100 mm | 2.6 *µ*m |
| Example 3 | 0.018° | R150 mm | 2.9 *µ*m |
| Comparative Example 1 | 0.003° | R200 mm | 6.0 *µ*m |
| Comparative Example 2 | - | - | 5.3 *µ*m |

From the results shown in Table 2, the surface roughness of the machined surface in Examples 1 to 3 is 5 µm or smaller, and all examples achieve a target value. On the other hand, in Comparative Examples 1 and 2, the surface roughness of the machined surface is larger than 5 µm, and all comparative examples have a greater value than that in Examples 1 to 3.

As described above, it is shown that satisfactory results are obtained in the cutting inserts in Examples 1 to 3.

In addition, respective configurations (components) described in the above-described embodiments, explanatory notes, and the like may be combined within a range not departing from the concept of the present invention, and configurations can be added, omitted, replaced, or otherwise modified. In addition, the present invention is not limited by the above-described embodiments, and is limited only by the scope of the appended claims.

### [Industrial Applicability]

According to the present invention, it is possible to provide a cutting insert which can achieve surface roughness of a machined surface of 5 µm or smaller, and an indexable rotary cutting tool including the cutting insert.

### [Reference Signs List]

1: Cutting insert
2: Rake face
3: Seating surface
4: Flank face
5: Cutting edge
5a: Corner edge
5b: Main cutting edge
5c: Wiper edge
5d: Inner cutting edge
5e: Second corner edge
6: Recess portion
10: Tool main body
11: Indexable rotary cutting tool
JO: Rotational axis
L1: Extension line
L2, L3: Tangent line
P: Boundary point (end point)
Q: Tool lowest point (lowest point)
L: Protrusion amount of wiper edge 5c with respect to machined surface
R: Arc radius
α: Angle formed by main cutting edge 5b and inner cutting edge 5d
θ: Angle formed by tangent line L2 and tangent line L3

## Claims

1. A cutting insert comprising:
a rake face;
a seating surface facing the rake face;
a flank face configured to connect the rake face and the seating surface; and
a cutting edge formed in an intersecting ridgeline between the rake face and the flank face,
wherein the cutting edge includes a linear main cutting edge, a corner edge, and a wiper edge in this order,
a recess portion is provided in an end portion of the main cutting edge on a side opposite to an end portion connected to the corner edge,
the wiper edge is formed in an arc shape, and is connected to the corner edge by a tangent line, and
when viewed from a side facing the rake face, and when an extension line of the main cutting edge is defined as L1, a tangent line of the wiper edge which is perpendicular to the extension line L1 is defined as L2, and a tangent line of the wiper edge which passes through an end point P of the wiper edge on a corner edge side is defined as L3, an angle θ formed by the tangent line L2 and the tangent line L3 is within a range of 0.010° ≤ θ ≤ 3.0°.

2. The cutting insert according to Claim 1,
wherein the wiper edge has a perfect arc shape when viewed from the side facing the rake face.

3. The cutting insert according to Claim 2,
wherein an arc radius R of the wiper edge is within a range of 50 mm ≤ R < 200 mm.

4. The cutting insert according to Claim 1 or 2,
wherein the cutting edge includes the main cutting edge, the corner edge, the wiper edge, a linear inner cutting edge, and a second corner edge,
the inner cutting edge is connected to an end portion of the wiper edge on a side opposite to an end portion connected to the corner edge,
the second corner edge is connected to an end portion of the inner cutting edge on a side opposite to an end portion connected to the wiper edge, and
an angle α formed by the main cutting edge and the inner cutting edge is within a range of 80° ≤ α < 90°.

5. An indexable rotary cutting tool comprising:
a cutting insert including a rake face, a seating surface facing the rake face, a flank face configured to connect the rake face and the seating surface, and a cutting edge formed in an intersecting ridgeline between the rake face and the flank face; and
a tool main body rotatable around an axis of a rotational axis,
wherein the cutting edge includes a linear main cutting edge, a corner edge, and a wiper edge in this order, a recess portion is provided in an end portion of the main cutting edge on a side opposite to an end portion connected to the corner edge, the wiper edge is formed in an arc shape, and is connected to the corner edge by a tangent line, and when viewed in a direction facing the rake face, and when an extension line of the main cutting edge is defined as L1, a tangent line of the wiper edge which is perpendicular to the extension line L1 is defined as L2, and a tangent line of the wiper edge which passes through an end point P of the wiper edge on a corner edge side is defined as L3, an angle θ formed by the tangent line L2 and the tangent line L3 is within a range of 0.010° ≤ θ ≤ 3.0°,
the cutting insert is mounted on the tool main body, and
a lowest point of the cutting insert in a direction along the rotational axis is located on the wiper edge.

6. The indexable rotary cutting tool according to Claim 5,
wherein the wiper edge of the cutting insert has a perfect arc shape when viewed in the direction facing the rake face.

7. The indexable rotary cutting tool according to Claim 6,
wherein an arc radius R of the wiper edge of the cutting insert is 50 mm ≤ R < 200 mm.
